# EUROPEAN PATENT SPECIFICATION

(11) **EP 0 360 047 B1**
(45) Date of publication and mention of the grant of the patent: **03.02.1993**
(21) Application number: 89116032.7
(22) Date of filing: 30.08.1989
(51) Int. Cl.: C25B 1/00

(54) **Eatables and drinkables**
Esswaren und Getränke
Denrées mangeables et buvables

(30) Priority: 01.09.1988 JP 218750/88
(43) Date of publication of application: 28.03.1990
(73) Proprietor: P.N.C. INDUSTRY CO., LTD., Kanazawa-shi Ishikawa-ken, 921 (JP)
(72) Inventor: Honda, Yasunori c/o P.N.C. Industry Co., Ltd., Kanazawa-shi Ishikawa-ken, 921 (JP)
(74) Representative: Berendt, Thomas

(56) References cited:
- EP-A- 0 246 957
- GB-A- 2 063 914

## Description

### Technical Field

The present invention relates to a method of preparing alkaline ion extracts from plants in an electrolysis apparatus as well as a method of preparing eatables and/or drinkables containing such alkaline ion extracts and eatables and drinkables prepared thereof.

### Background of the Invention

Conventional eatables and drinkables containing extracts of plants make use of extracts obtained from edible plants by heating, drying or pressurizing them. One problem with such conventional extracts relates to a limitation in source. More particularly, sources for the production of extracts by heating, drying and pressurizing are limited to eatable plants. An additional problem is that the absorbability of the extracts by the consumer is less than satisfactory. As a consequence, there is an existing need for eatables and drinkables containing extracts capable of providing various nutriments while also excelling in absorbability.

An apparatus that may be adapted and utilized to provide such improved eatables and drinkables containing plant extracts is disclosed in Japanese patent publication No. 55-52881 published on December 8, 1980. This publication discloses an apparatus for extracting ingredients from plants. The apparatus comprises a vessel formed of a heat resistant and electrically insulating material. The vessel includes three interconnected chambers with the middle chamber designed to receive plant material. A first internal container for an anodic tank is housed within the first chamber and a second internal container for a cathodic tank is housed within the second chamber. An electrode is provided in each of the internal chambers. The electrodes are connected to a power source which supplys a current. The components of the plants are then electrolyzed in the central chamber into positive and negative ions. The negative ion plant components pass into the anodic tank or first internal container while the positive plant component ions pass into the cathodic tank or second internal container.

The utilization of the alkaline ion extracts of plants in eatables and drinkables was neither taught nor suggested in Japanese patent publication No. 55-52881.

### Summary of the Invention

Accordingly, a primary object of the present invention is to provide a method of preparing eatables and drinkables containing plant extracts that may be produced from a relatively large number of sources including uneatable portions of a plant such as trunks, branches and leaves of trees.

Yet another object of the present invention is to provide a method of preparing eatables and drinkables containing plant extracts capable of providing various nutriments to the consumer.

Another object of the present invention is to provide a method of preparing eatables and drinkables produced from plant extracts which exhibit improved absorbability through the digestive system of the consumer.

Still a further object of the present invention is to provide a method of preparing eatables and drinkables containing alkaline ion extracts of plants which not only provide various important nutriments but are also quickly and easily absorbed in the digestive track as well as eatables and drinkables obtained thereby.

Still another object of the invention is to provide eatables and drinkables containing alkaline ion extracts of plants by such a method that are effective in preventing acidification of bodies and hence serve to promote health.

In accordance with the foregoing and other objects of the present invention, a method of preparing alkaline ion extracts from plants with an electrolysis apparatus including a vessel, an anode and a cathode is provided, comprising the steps of claim 1.

According to this method for preparing alkaline ion extracts from plants plant material is placed in the middle chamber of the vessel. The plant material may either be edible portions of the plant such as vegetables, fruits and mosses. Alternatively, however, unedible portions such as trunks, branches and leaves of trees may also be used. Thus, it should be appreciated that the present invention allows the utilization of these additional raw materials that are normally discarded as waste.

In the next step of this method an electrolyzing solution, such as water, is added to the vessel. Preferably, with the addition of water the vessel is also heated.

After placing the plant material in and adding the electrolyzing solution to the vessel, this method proceeds with the step of supplying current to the anode and cathode in the opposing end chambers of the vessel. The effective components of the plants are then electrolyzed in the central chamber into positive and negative ions. The effective components containing the negative ions move toward the positive electrode or anodic tank while those containing the positive ions move toward the negative electrode or cathodic tank. More particularly, the negative and positive ions pass through a porous material that defines the anodic and cathodic tanks as the ions travel to the anode and cathode respectively.

The alkaline ion extracts collect in the negative electrode or cathodic tank as electrolysis continues. The thus obtained alkaline ion extracts are separated from the remaining solution in the electrolysis vessel, and way be collected for subsequent use or consumption. This, for example, may be completed by siphoning this solution from the cathodic tank in the area immediately surrounding the cathode. Once separated, the alkaline ion extracts may be consumed alone or used in preparing other eatables and drinkables.

For example, the separated ion extracts may be added to concentrated fruit juice to provide an exceedingly healthful drick including a number of important vitamins and minerals. Alternatively, the recovered alkaline ion extract solution may, for example, be added directly to other solid foodstuffs during cooking. Further, the solution itself may be heated and boiled off to recover the extracts in a powder form which may then be mixed with solid foodstuffs for later consumption.

Advantageously, the alkaline ion extracts prepared according to the method of the present invention provide various important nutriments. These nutriments are also readily absorbable in the digestive system of the consumer. For example, the absorbability of elements such as calcium and magnesium are significantly increased with the alkaline extracts prepared according to the present invention. Such elements are critically important to the healthy existence of our species. It should also be appreciated that the alkaline ion extracts are effective to prevent acidification of bodies and, hence, serve to promote health. The alkaline ion extracts are also easily available in large quantities since various types of plants and unedible plant components such as branches and trunks are usable as raw material in the preparation of these extracts.

Still other objects of the present invention will become readily apparent to those skilled in this art from the following description wherein there is shown and described a preferred embodiment of this invention, simply by way of illustration of one of the modes best suited to carry out the invention. Accordingly, the drawings and descriptions will be regarded as illustrative in nature and not as restrictive.

### Brief Description of the Drawing

The accompanying drawing illustrates several aspects of the present invention, and together with the description serves to explain the principles of the invention. In the drawing:
Figure 1 is a perspective view of an electrolysis vessel utilized in preparing alkaline ion extracts; and
Figure 2 is a cross-sectional view of the electrolysis vessel shown in Figure 1.

Reference will now be made in detail to the present preferred embodiment of the invention, an example of which is illustrated in the accompanying drawing.

### Detailed Description of the Invention

Reference is now made to the drawing figures showing one type of electrolysis apparatus 10 that may be utilized in the present method of preparing alkaline ion extracts from plants. As shown, the electrolysis apparatus 10 includes a vessel 12 formed of a heat resistant and electrically insulating material. The vessel 12 includes three interconnected chambers 14, 16, 18. As shown, these chambers are aligned. One end chamber 14 houses a first internal container 20 for an anodic tank. More particularly, the container 20 is formed of a porous material which will allow the passage of ions traveling in an electrolysis solution such as water. The other end chamber 18 houses a second internal container 22 for a cathodic tank. Again, the container 22 is formed of a porous material that allows the passage of ions in an electrolysis solution. The middle chamber 18 is adapted to receive raw plant material P such as fruits, vegetables, moss or inedible portions of the plant such as trunks, branches and leaves.

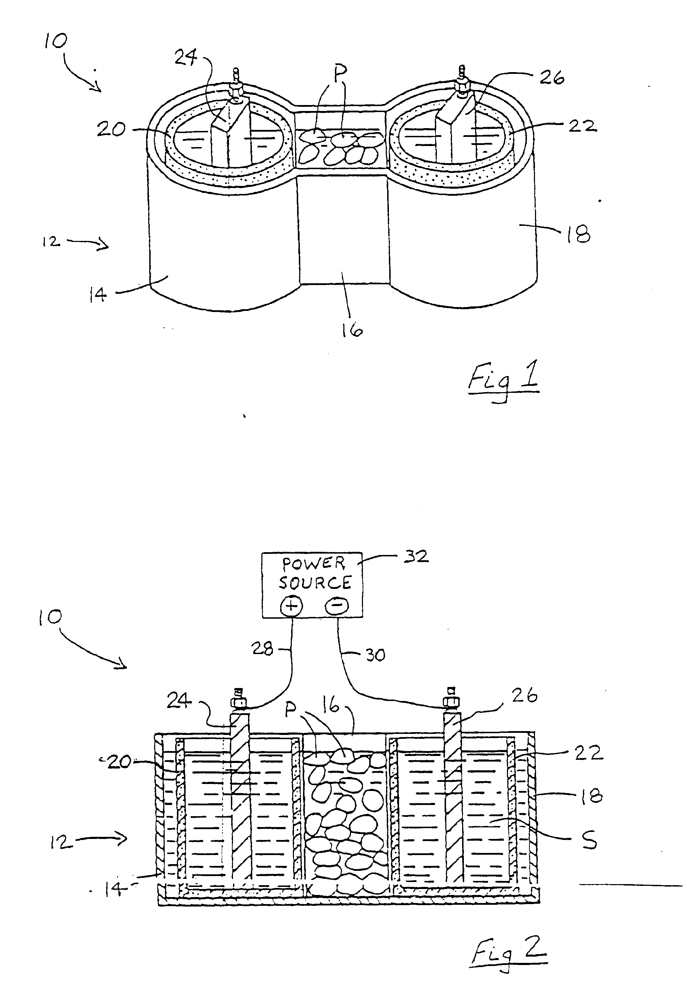

Electrodes 24, 26 are positioned in the anodic and cathodic tanks 20, 22 respectively. The electrodes 24, 26 are connected by means of conductors 28, 30 to the positive and negative terminals of a power source 32 shown schematically in Figure 2. As shown, the electrode 24 is connected to the positive terminal of the power source 32 and acts as an anode. The electrode 26 is connected to the negative terminal of the power source 32 and acts as a cathode.

After placing plant material P in the intermediate chamber 16 of the vessel 12 there follows the step of adding an electrolyizing solution S such as water to the vessel. As shown in Figure 2, the water is added to a level sufficiently high to cover all the plant material P and nearly fill the vessel 12. Additionally, the water may be heated to speed the processing.

The next step in the present method of preparing alkaline ion extracts from plants is the electrolyzing of the plant material P by supplying current to the anode 24 and cathode 26 through the power source 32. The effective components of the plant material P are then electrolyzed in the intermediate chamber 16 into positive and negative ions. The effective components containing the negative ions are gradually drawn toward the anode 24 and pass from the intermediate compartment 16 through the porous anodic container wall 20 into the anodic chamber near the anode 24. The contrast, effective components containing the positive ions are drawn toward the electrode 26 and pass from the intermediate chamber 16 through the porous cathodic container wall 22 into the cathodic tank near the cathode 26.

Accordingly, after sufficient time has passed for electrolysis to be completed, the alkaline ion extracts from the plant material P are drawn into the cathodic tank within the porous container 22 adjacent the cathode 26. The next step in the method is the separating of these alkaline ion extracts for subsequent use. This may be done in any number of ways including the siphoning of the solution S including the alkaline ion extracts from the cathodic tank. Of course, if desired the acidic ion extracts that collect in the anodic tank adjacent the anode 24 may be separated and collected in the same manner.

The recovered solution from the cathodic tank including water and the alkaline ion extracts of the plant material P may be consumed directly.
Alternatively, the recovered solution may be mixed with other solutions such as concentrated fruit juice and then consumed as a refreshing and healthful drink.

It should also be appreciated, however, that the recovered solution may be added directly to solid foodstuffs such as meat and vegetables during cooking. Further, the recovered solution may be boiled down to recover the alkaline extracts in powder form for sprinkling on meats, vegetables and other solid foodstuffs. Thus, it should be appreciated by mixing these separated alkaline ion extracts with drinkables and eatables a more healthful meal filled with important vitamins and minerals is obtained. Further, as indicated above, these nutriments are readily absorbed in the digestive system. The alkaline ion extracts are also effective to prevent acidification of bodies and, thus, they serve to promote overall health by maintaining the proper pH balance in the digestive track which promotes the growth of healthful bacteria necessary for proper digestion of food.

The foregoing description of the preferred embodiment of the invention has been presented for purposes of the illustration. It is not intended to be exhaustive or to limit the invention to the precise form disclosed. The preferred embodiment was chosen and described to provide the best illustration of the principles of the invention and its practical application to thereby enable one of ordinary skill in the art to utilize the invention in various embodiments and with various modifications as are suited to the particular use contemplated.

## Claims

1. A method of preparing alkaline ion extracts from plants in an electrolysis apparatus including a vessel, an anode and a cathode comprising the steps of:
placing plant material in said vessel,
adding an electrolyzing solution to said vessel,
supplying current to said anode and cathode; and
separating alkaline ion extracts from plants at said cathode for subsequent use.

2. A method of preparing eatables and/or drinkables including alkaline ion extracts from plants comprising the steps of:
separating alkaline ion extracts from plants according to the method of claim 1; and mixing said separated alkaline ion extracts with eatables and/or drinkables.

## Patentansprüche

1. Verfahren zum Herstellen von alkalischen Ionenextrakten aus Pflanzen in einer Elektrolysevorrichtung, welche einen Behälter, eine Anode und eine Kathode umfaßt, welches die folgenden Schritte aufweist:
Einbringen des Pflanzenmaterials in den Behälter,
Zugeben einer Elektrolyselösung zu dem Behälter,
Anlegen von Strom an die Anode und die Kathode, und
Separieren der alkalischen Ionenextrakte von den Pflanzen an der Kathode zur anschließenden Verwendung.

2. Verfahren zum Herstellen von Eßwaren und/oder Getränken, welche alkalische Ionenextrakte von Pflanzen enthalten, welches die folgenden Schritte aufweist:
Trennen der alkalischen Ionenextrakte von den Pflanzen gemäß dem Verfahren nach Anspruch 1, und
Vermischen der separierten, alkalischen Ionenextrakten mit Eßwaren und/oder Getränken.

## Revendications

1. Méthode de préparation d'extraits d'ions alcalins de plantes dans un appareil d'électrolyse comprenant un récipient, une anode et une cathode, comprenant les phases de:
placer le produit plante dans ledit récipient,
ajouter une solution d'électrolyte dans ledit récipient,
alimenter en courant lesdites anode et cathode, et
séparer, à ladite cathode, les extraits d'ions alcalins des plantes pour un usage subséquent.

2. Méthode de préparation de denrées mangeables et/ou buvables, y compris d'extraits d'ions alcalins de plantes comprenant les phases:
séparation des extraits d'ions alcalins de plantes suivant la méthode de la revendication 1, et
mélange desdits extraits d'ions alcalins séparés avec des denrées mangeables et/ou buvables.
